# EUROPÄISCHE PATENTSCHRIFT

(11) **EP 0 686 478 B1**
(45) Veröffentlichungstag und Bekanntmachung des Hinweises auf die Patenterteilung: **05.01.2000**
(21) Anmeldenummer: 95108581.0
(22) Anmeldetag: 05.06.1995
(51) Int. Cl.: B29C 63/04, B32B 7/08, B32B 15/14

(54) **Metallteil mit Kaschierung und Verfahren zur Herstellung eines solchen**
Lined metal article and method for its manufacture
Pièce métallique doublée et procédé pour sa fabrication

(30) Priorität: 08.06.1994 DE 4419994
(43) Veröffentlichungstag der Anmeldung: 13.12.1995
(73) Patentinhaber: Pirchl, Gerhard, 5708 Birrwil (CH)
(72) Erfinder: Pirchl, Gerhard, 5708 Birrwil (CH)
(74) Vertreter: Riebling, Peter, Dr.-Ing.

(56) Entgegenhaltungen:
- EP-A- 0 500 202
- EP-A- 0 603 498
- DE-A- 3 808 851
- DE-A- 4 305 189
- DE-C- 4 401 903
- GB-A- 2 176 743

## Beschreibung

Die Erfindung betrifft ein Metallteil mit einer Kaschierung mittels einer Textil- oder Kunststoff-Folie nach dem Oberbegriff des Patentanspruches 1 sowie ein Verfahren zur Herstellung eines solchen nach dem Oberbegriff des Patentanspruches 2.

Derartige Kaschierungen von Metallteilen werden insbesondere in der Kraftfahrzeug-Industrie für die Innenausstattung von Fahrgasträumen verwendet. Beispielsweise müssen Türen, die aus einem Stahlblech bestehen, an der Innenseite eine Platte tragen, die ihrerseits mit einem Kunstlederbezug und/oder Stoffbezug bezogen ist.

Ebenso besteht dieses Problem bei der Anbringung von Kunstleder und Stoffbezügen am Himmel eines Kraftfahrzeuges oder an anderen Flächen, die sichtbar sind.

Bisher war es nicht möglich und bekannt, daß man unmittelbar auf einer verformten Metallplatte einen Bezug durch Kaschieren oder Aufkleben anbringen konnte, weil dies aus technischen Gründen wegen der verformten Flächen nicht möglich war. Insbesondere besteht bei Tiefzieh-Metallteilen der Nachteil, daß diese noch ölbeschichtet aus dem Tiefziehprozeß sind und daß daher ein Ankleben eines entsprechenden Bezuges nicht möglich ist.

Man hat sich bisher so beholfen, daß man immer noch ein zusätzliches Formteil verwendete und auf dieses Formteil den Bezug aufklebte, um dann dieses Formteil mit dem verformten Metallblech zu verbinden.

Der GB-A-2176743 ist ein, aus zwei flexiblen Materialien bestehender Überzug zu entnehmen, wobei die sich im Bereich der im Werkstoff befindlichen Ausfräsung überlappenden Ränder dieser Materialien mittels einer in die Ausfräsung eingebrachten Klemmschiene sowie durch vier weitere auf dem Werkstoff befindlichen Stifte mechanisch arretiert werden. Es erfolgt kein Zuklemmen der die überlappenden Enden der Bezugsstoffe aufnehmenden Nut.

Durch die DE-C-4401903 ist weiterhin bekannt, die Verbindung von Bezugsstoffen mit einer Metalloberfläche in einer Nut nur durch Klebwirkung zu gewährleisten, wobei die Nutausbildung im Metallteil separat von der Bezugsstoff-Kaschierung erfolgt.

Schließlich weist die EP-A-0500202 nur die Möglichkeit der Verwendung von einem Kaschierkleber, um zwei Bezugsstoffe in einer verdeckten Metallnut saumfrei miteinander zu verbinden, auf, ohne gleichzeitig einen Quetschprozeß zu erwähnen. Dabei erfolgen die Metallnut-Ausbildung und die Bezugsstoff-Kaschierung in separaten Arbeitsgängen.

Der Erfindung liegt deshalb die Aufgabe zugrunde, das Kaschieren eines Metallteiles mit einem Bezug aus Kunstleder, Stoff oder dergleichen so weiterzubilden, daß es auf wesentlich einfachere und kostengünstigere Weise herstellbar ist.

Zur Lösung der gestellten Aufgabe ist die Erfindung vorrichtungsmäßig durch die technische Lehre des Anspruches 1 und verfahrensmäßig durch die technische Lehre des Anspruches 2 gekennzeichnet.

Wesentliches Merkmal der Erfindung ist, daß auf einem glatten Metallteil, z. B. einer Platte oder dgl. der Bezug unmittelbar durch Verkleben aufgebracht wird.

In einem zweiten Arbeitsschritt wird dann die Platte zusammen mit dem aufgebrachten Bezug im Tiefziehverfahren verformt, wobei entscheidend wichtig ist, daß an der Nahtstelle, zwischen unterschiedlichen Oberflächenbeschichtungen (Bezügen) im Tiefziehvorgang in das Metallblech eine Sicke eingeformt wird, in welche die Randbereiche der Bezüge mit hineingezogen werden.

Das heißt also, es werden die zu verklebenden Bezüge an ihren Überlappungsbereichen übereinanderliegend verklebt und in diesem Überlappungsbereich wird nun eine Sicke in das Metallblech eingeformt, welche Sicke dann dafür sorgt, daß die Randbereiche in diese Sicke mit aufgenommen werden und dort festliegen. Damit wird der wesentliche Vorteil erreicht, daß die Ungenauigkeiten der Bezüge in den Randbereichen und des Materials mit in die Sicke hineingezogen werden hineingezogen werden und so ein einwandfreier glatter Übergang des Randbereiches des jeweiligen Bezuges in die Sicke gegeben ist.

In einem weiteren Verfahrensschritt wird dann diese Sicke mit einer Quetschstelle versehen, wodurch die Randbereiche der Bezüge zusammengequetscht werden und klemmend in der Sicke gehalten werden, wodurch nun der Stoffbezug bzw. der Kunstlederbezug einwandfrei auf diesem Metallteil gehalten wird.

Es ergibt sich damit ein optisch schöner Übergang, weil man keine ausgefransten Ränder oder dgl. sieht, weil diese Ränder in den Sicken mit aufgenommen sind.

Es bedarf demzufolge auch keine Verschweißungen von überlappenden Randbereichen, wie sie an sich bekannt sind, wo in an sich bekannter Weise derartige Randbereiche mit Ultraschall-Schweißung miteinander verbunden werden. Diese Ultraschall-Schweißung hat den Nachteil, daß der Rand aufträgt, sichtbar ist und daß diese Verschweißung nicht immer optimal durchgeführt werden kann, wodurch die Gefahr besteht, daß die Randbereiche nachträglich ausfransen.

In einer anderen Ausführungsform ist vorgesehen, eine Kaschierung am Rand des Metallteils durch ein Umbördeln des Metallteils zusammen mit dem Bezugsstück herbeizuführen. Dadurch wird der Vorteil erreicht, daß der Rand des Bezugsstücks nicht mehr sichtbar ist und somit die bisher häßlichen Ausfranseffekte oder das Austreten von Klebstoff nicht mehr sichtbar sind.

Eine derartige Beschichtung einer Metallplatte unmittelbar mit einem Bezug war - wie vorhin angegeben - noch überhaupt nicht bekannt. Es besteht mit dem Gegenstand der vorliegenden Erfindung daher der wesentliche Vorteil, daß eine derart beschichtete Metallplatte sehr gut wieder recyclingfähig ist. Bezieht man beispielsweise eine Alu-Platte mit einem derartigen Bezug, dann kann man zu Verwertungszwecken des Aluminiums den Bezug leicht wieder von der Platte herunterreißen, indem die Verklebung wieder gelöst wird, und das Aluminium liegt dann als Reinstoff vor und kann ohne weiteres wieder verwertet werden.

Als Metallmaterial, welches mit dem Bezug kaschiert wird, kommt daher neben Aluminium auch Stahlblech in Frage oder beliebige andere Metallmaterialien, die derart verformbar sind, daß es möglich ist, dort im Randbereich zwischen sich überlappenden Bezügen eine Sicke anzuordnen.

Die vorliegende Erfindung erstreckt sich auf sämtliche Materialien, wo es möglich ist, eine Sicke in dem Material anzubringen, welche in der Lage ist, die Randbereiche der auf dem Material zu verklebenden Bezüge aufzunehmen.

Damit ist es selbstverständlich auch möglich, Metallteile, die aus mehreren Schichten zusammengesetzt sind, zu kaschieren. Es können z. B. in Sandwich-Bauweise verklebte Aluminiumbleche verwendet werden; ebenso ist die Verwendung unterschiedlicher Metalle möglich, sofern beim Umformen des Metallteils kein Reißen eines Bleches auftritt. Dies kann aber durch geeignete Maßnahmen wie z. B. eine Wärmebehandlung, vergrößerte Biegeradien, die Ausbildung der Sicke bzw. der Umbördelung verhindert werden.

Der Erfindungsgegenstand der vorliegenden Erfindung ergibt sich nicht nur aus dem Gegenstand der einzelnen Patentansprüche, sondern auch aus der Kombination der einzelnen Patentansprüche untereinander.

Alle in den Unterlagen, einschließlich der Zusammenfassung, offen barten Angaben und Merkmale, insbesondere die in den Zeichnungen dargestellte räumliche Ausbildung werden als erfindungswesentlich beansprucht, soweit sie einzeln oder in Kombination gegenüber dem Stand der Technik neu sind.

Im folgenden wird die Erfindung anhand von einer lediglich einen Ausführungsweg darstellenden Zeichnung näher erläutert.
Hierbei gehen aus den Zeichnungen und ihrer Beschreibung weitere wesentliche Merkmale und Vorteile der Erfindung hervor.

Es zeigen:
- Figur 1:: schematisiert in Draufsicht ein fertiggestelltes Türblech von der Innenseite her;
- Figur 2:: ein Ausschnitt aus dem Türblech nach Figur 1 in unverformtem Zustand;
- Figur 3:: ein Schnitt durch eine Sicke gemäß der Linie III-III in Figur 2;
- Figur 4:: Schnitt durch die gleiche Sicke im endgültigen, verformten Zustand;
- Figur 5:: Ansicht gemäß Figur 4 mit mehrschichtigem Metallteil;
- Figur 6:: Eine Randkaschierung eines mehrschichtigen Metallteils;
- Figur 7:: Eine perspektivische Darstellung des Auflegens eines Stoffbezuges auf eine umverformte Blechtafel;
- Figur 8:: Eine perspektivische Darstellung des umgeformten Teils aus Figur 7;
- Figur 9:: Eine Detaildarstellung aus Figur 8.

Ein fertiges Türblech nach der Erfindung besteht im wesentlichen aus einer Metallplatte, die bereits schon fertig sphärisch verformt ist. Dieses Türblech 1 trägt eine Reihe von unterschiedlichen Bezügen an der Innenseite, wobei der obere Bereich beispielsweise mit einem Kunstlederbezug 2 versehen ist, der sich in Richtung am Türeinstieg nach unten erstreckt und der unten sich wiederum im Richtung des Unterteils am Türblech 1 angeordnet ist.

Im Mittenbereich des Türbleches ist hingegen ein Stoffbezug 3 angeordnet, wobei dieser Stoffbezug 3 noch sich über eine Vertiefung 5 erstrecken kann, die als Vertiefung für das Hineinlegen des Armes geeignet ist. Der mittige Teil des Türbleches 1 weist eine Ausnehmung 4 auf, die unbeschichtet ist, und in welcher der Türgriff und entsprechende Verriegelungs- oder Öffnungseinrichtungen zu liegen kommen.

Problem ist nun, daß die verschiedenen Bezüge 2,3 nahtlos und glatt sowie faltenfrei ineinander übergehen sollen.

Hierbei war es bisher lediglich bekannt, die Innenseite des Türbleches mit einem Kunststoff-Formteil oder einem Holzteil zu versehen und die verschiedenen Bezüge 2,3 auf diesem Holzteil anzubringen.

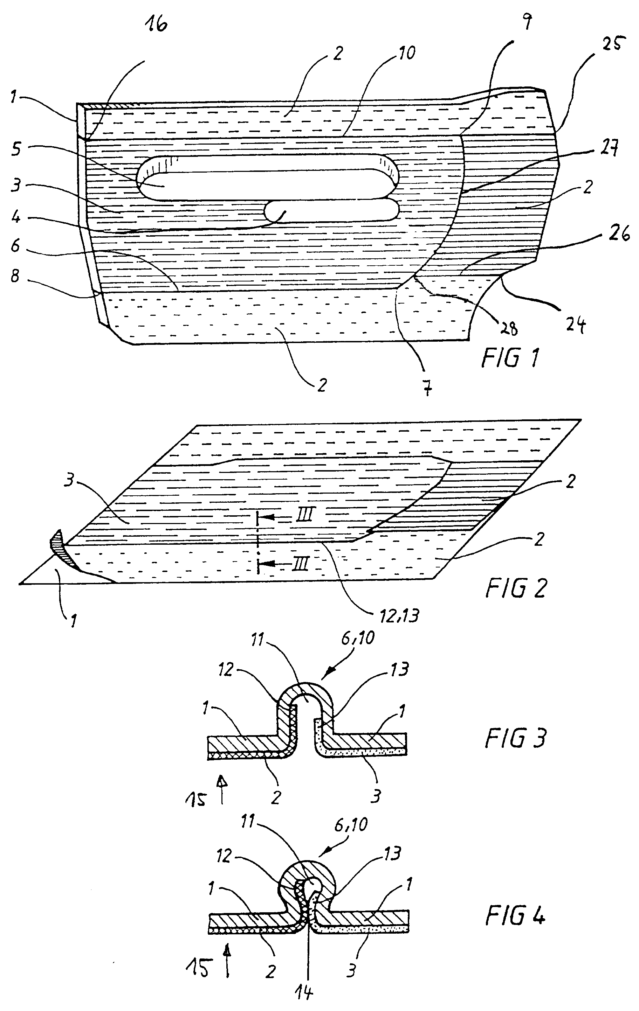

Die Erfindung hingegen sieht vor, daß gemäß Figur 2 auf dem unverformten, glatten Türblech 1 die Bezüge 2,3 aufgeklebt werden, wobei sich die Randbereiche 12,13 gegenseitig überlappen.

In einem weiteren Arbeitsgang werden dann die sich überlappenden Randbereiche 12,13 mit Sicken 6,10 versehen, so daß gemäß Figur 3 diese Randbereiche 12,13 in den Bereich der jeweiligen Sicke 6,10 eingezogen werden.

Nach dem Einziehen der Randbereiche 12,13 in die jeweilige Sicke 6,10 wird dann am Hals der Sicke eine durchgehende Quetschstelle 14 ausgebildet, so daß die Randbereiche 12,13 eingequetscht werden und sich nicht mehr lösen können. Von der Sichtseite 15 her ergibt dieses mit den Bezügen 2,3 versehene Türblech ein optisch einwandfreies Aussehen, weil die möglicherweise ausgefransten Randbereiche nicht mehr sichtbar sind, weil sie von der Rille 11, die durch die Sicke 6,10 gebildet ist, aufgenommen sind.

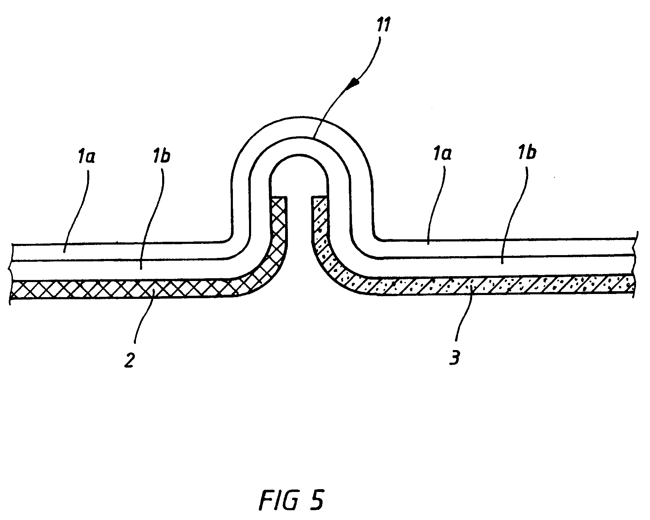

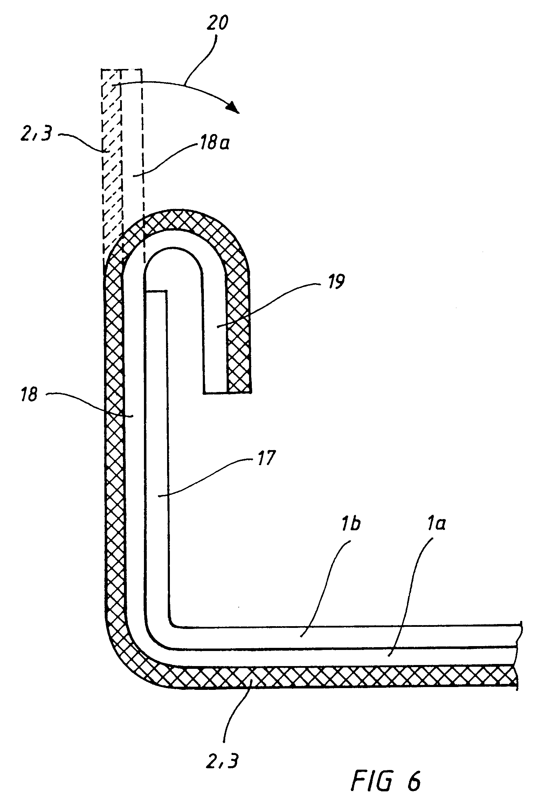

Im Ausführungsbeispiel nach Figur 1 erstreckt sich dann beispielsweise die Sicke 6 von Position 8 bis Position 7, die Sicke 27 von Position 7 bis Position 7 bis Position 9, die Sicke 26 von Position 28 bis Position 24 und Sicke 10 von Position 25 bis Position 16. Figur 5 zeigt eine mehrschichtige Ausbildung der noch nicht verpreßten Sicke. Hier setzt sich das Bauteil aus zwei in Sandwich-Bauweise miteinander verbundenen Blechtafeln 1a,1b zusammen. Dabei sind hier wie in oben beschriebener Weise in die Rille 11 ein Kunstlederbezug 2 sowie ein Stoffbezug 3 eingeführt, die dann, entsprechend Figur 4, zu einer Sicke verformt werden, um in diesem Bereich durch die Sickenanordnung festgehalten zu werden. Selbstverständlich ist auch eine drei- oder mehrschichtige Ausbildung möglich. Figur 6 zeigt die erfindungsgemäße Randbefestigung eines Bezugsstücks 2 bzw. 3. Hier wird eine mehrschichtige Ausbildung dargestellt, obwohl selbstverständlich auch eine einschichtige Ausbildung möglich ist. In der mehrschichtigen Ausbildung ist es vorgesehen, den Schenkel 17 der inneren Blechtafel 1b gerade auszubilden. Am Schenkel 18 der Blechtafel 1a ist der jeweilige Bezugsstoff 2 oder 3 befestigt. Die endgültige Fixierung erfolgt nun dadurch, daß der Stoff- oder Kunstlederbezug 2,3 zusammen mit dem verlängerten Schenkel, der in Figur 6 mit Ziffer 18a dargestellt ist, in Pfeilrichtung 20 über den inneren, geraden Schenkel 17 umgebördelt wird.

Es kommt zwar zu einer Verlängerung des Bezugsstücks 2,3 im Bereich der Umbördelung 19; dies ist aber nicht weiter schädlich, da sich das Bezugsstück 2,3 etwas auf seine Aufkaschierung zurückzieht, im Randbereich aber festliegt.

Selbstverständlich ist es nicht nötig, den in Figur 6 dargestellten 90°- Winkel des Metallteils 1 einzuhalten. Es ist auch möglich, daß das Metallteil 1 völlig gerade in die Umbördelung 19 ausläuft.

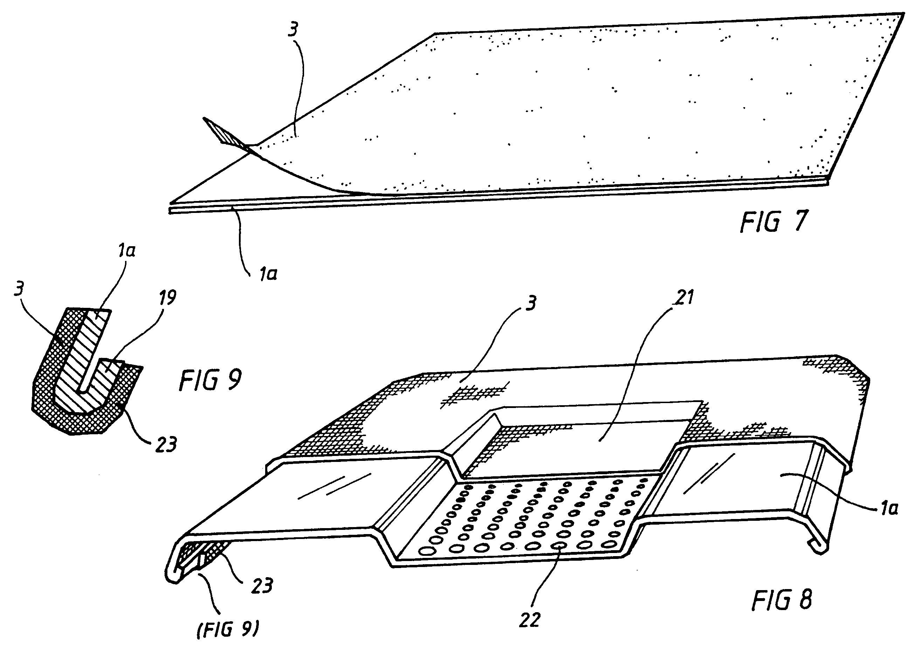

Die Figuren 7 bis 9 ergeben eine weitere Darstellung. Gemäß Figur 7 wird ein Stoffbezug 3 auf eine unverformte Blechtafel 1b aufgelegt. Der Stoffbezug 3 und die Blechtafel 1a werden dann gemäß Figur 8 gemeinsam mit Hilfe eines einzigen Umformvorganges verformt. Dabei wird sowohl ein mittleres verformtes Teil 21, z. B. eine Hutablage hergestellt, während gleichzeitig in den Randbereichen eine Umbördelung stattfindet.

Aus Gründen der Gewichtsersparnis kann ein Teil der ursprünglichen Blechtafel 1a mit gestanzten Löchern 22 versehen sein.

Wichtig hierbei ist, daß im Bereich der Umbördelung 19 (Figur 6) die Kante 23 des Stoffbezuges 3 um die Blechtafel herumreicht und an den entsprechenden Schenkeln außen anliegt.

Dieses Detail ist in Figur 9 näher dargestellt.

Selbstverständlich kann die Blechtafel 1a auch aus mehreren Teilen gemäß den vorangehenden Zeichnungen, insbesondee entsprechend Figur 6 bestehen, um einen Sandwich-Aufbau der Blechtafel 1a,1b zu erreichen, die dann aufgrund dieses Sandwich-Aufbaus ein außerordentlich günstiges Geräuschdämmungsverhalten aufweisen.

Eine derartige Sandwich-Blechplatte verhält sich wie ein Karton und weist ein entsprechendes Schwingungsverhalten auf.

Mit der vorliegenden Erfindung ist es möglich, ein- oder mehrschichtige Metallteile mit einem Bezug aus verschiedenen Materialien in einfacher und kostengünstiger Weise zu kaschieren.

### ZEICHNUNGS-LEGENDE

- 1: Türblech
- 1a,1b: Blechtafel
- 2: Kunstlederbezug
- 3: Stoffbezug
- 4: Ausnehmung
- 5: Vertiefung
- 6: Sicke
- 7: Position
- 8: Position
- 9: Position
- 10: Sicke
- 11: Rille
- 12: Randbereich
- 13: Randbereich
- 14: Quetschstelle
- 15: Sichtseite
- 16: Position
- 17: Schenkel
- 18,18a: Schenkel
- 19: Umbördelung
- 20: Pfeilrichtung
- 21: verformter Teil
- 22: gestanzte Löcher
- 23: Kante
- 24: Position
- 25: Position
- 26: Sicke
- 27: Sicke
- 28: Position

## Patentansprüche

1. Metallteil mit Kaschierung, insbesondere mit einem Kunstleder und/oder Textilbezug bezogenes Innenseitenteil einer Kraftfahrzeugtür, wobei die Kaschierung aus mindestens zwei Materialien besteht, deren Ränder sich im Bereich einer im Werkstoff befindlichen Nut überlappen und die aneinandergrenzenden Randbereiche (12, 13) der mindestens zwei Bezugsstücke (2, 3) gegenseitig überlappend an den mehrschichtigen und insbesondere in Sandwich-Bauweise ausgebildeten Metallteilen (1) befestigt sind, und die Bezugsstücke (2, 3) unmittelbar auf das Metallteil (1) aufgeklebt und am Rande des Metallteils (1) durch Umbördeln des Randbereiches des Metallteils (1) und der Bezugsstücke (2, 3) fixiert sind, und die Randbereiche (12, 13) der Bezugsstücke (2, 3) in einer, auf der kaschierten Sichtseite (15) abgewandten Seite sich befindenden Sicke (6, 10, 26, 27) des Metallteils (1) klemmend festgelegt sind, dadurch gekennzeichnet, daß diese klemmend festlegende Sicke (6, 10, 26, 27) zumindest an ihrem Hals zusammengequetscht ist und somit eine durchgehende und über die gesamte Länge der Sicke (6, 10, 26, 27) ausgebildete Quetschstelle (14) aufweist.

2. Verfahren zur Herstellung eines Metallteils mit Kaschierung, insbesondere eines mit einem Kunstleder und/oder Textilbezugs bezogenen Innenteils einer Kraftfahrzeugtür, bei dem mindestens zwei Bezugsstücke (2, 3), beispielsweise aus Kunstleder und/oder Textil, mit überlappend, verbundenen Randbereichen (12, 13) im Bereich der im Werkstoff befindlichen Nut mechanisch arretiert werden, wobei die zugeschnittenen Bezugsstücke (2, 3) unmittelbar auf das noch unverformte Metallblech (1) aufgeklebt werden und dann das Metallteil (1) mit dem aufgeklebten Bezug (2, 3) im Tiefziehverfahren umgeformt wird, wobei an der Nahtstelle zweier Bezugsstücke (2, 3) in das Metallblech (1) eine Sicke (6, 10, 26, 27) eingeformt wird, in welche die Randbereiche (12, 13) der Bezugsstücke (2, 3) mit hineingezogen werden und dort festliegen und die Randbereiche (12, 13) der Bezugsteile (2, 3) in der Sicke (6, 10, 26, 27) eingeklemmt gehalten werden, dadurch gekennzeichnet, daß die Sicke (6, 10, 26, 27) in ihrer Breitenrichtung zumindestens am Übergangsbereich zum Metallblech (1) hin nachfolgend mit einem Werkzeug zusanmengequetscht wird, wodurch zumindestens am Hals der Sicke (6, 10, 26, 27) eine durchgehende Quetschstelle (14) über die gesamte Länge der Sicke (6, 10, 26, 27) ausgebildet wird.

## Claims

1. Metal part with lining, especially an inside part of a motor vehicle door covered with an artificial leather and/or textile covering, wherein the lining consists of at least two materials whose edges overlap in the area of a groove found in the material and the contiguous edge areas (12, 13) of at least two cover pieces (2, 3) are attached in a mutually overlapping manner to the metal parts (1), which are multilayered and in particular of sandwich-type construction, and the cover pieces (2, 3) are glued directly to the metal part (1) and are fixed at the edge of the metal part (1) by beading the edge area of the metal part (1) and the cover pieces (2, 3), and the edge areas (12, 13) of the cover pieces (2, 3) are clamped in a bead (6, 10, 26, 27) of the metal part (1), which bead is located on the side turned away from the lined visible side (15), characterised in that this clamped bead (6, 10, 26, 27) is pinched together at least at its neck and so has a continuous pinched point (14) running the entire length of the bead (6, 10, 26, 27).

2. Method for manufacturing a metal part with lining, especially an inside part of a motor vehicle door covered with an artificial leather and/or textile covering, on which at least two cover pieces (2, 3), made for example from artificial leather and/or textile, are fixed mechanically in place with edge areas (12, 13) overlapping and connected in the area of the groove found in the material, wherein the cut-to-size cover pieces (2, 3) are glued directly to the still undeformed metal sheet (1) and then the metal sheet (1) is reshaped with the glued cover (2, 3) by means of the deep-drawing process, wherein at the seam between two cover pieces (2, 3) a bead (6, 10, 26, 27) is moulded in the metal sheet (1), into which bead the edge areas (12, 13) of the cover pieces (2, 3) are also drawn and fixed there and the edge areas (12, 13) of the cover parts (2, 3) are clamped in place in the bead (6, 10, 26, 27), characterised in that the bead (6, 10, 26, 27) is pinched together in its lateral direction at least at the transitional area to the metal sheet (1) with a tool, by means of which at least at the neck of the bead (6, 10, 26, 27) a continuous pinched point (14) is formed over the entire length of the bead (6, 10, 26, 27).

## Revendications

1. Pièce métallique pourvue d'une doublure, en particulier pièce latérale intérieure de porte de véhicule automobile qui est garnie d'un revêtement en similicuir et/ou en tissu, étant précisé que la doublure se compose d'au moins deux matériaux dont les bords se recouvrent dans la zone d'une rainure située dans la matière, que les zones du bord voisines (12, 13) des deux pièces de revêtement (2, 3) sont fixées aux pièces métalliques (1) multicouches et en particulier à structure sandwich en se recouvrant mutuellement, que les pièces de revêtement (2, 3) sont collées directement sur la pièce métallique (1) et sont fixées au bord de celle-ci par pliage de la zone du bord de la pièce métallique (1) et des pièces de revêtement (2, 3), et que les zones du bord (12, 13) des pièces de revêtement (2, 3) sont bloquées par serrage dans une moulure (6, 10, 26, 27) de la pièce métallique (1) qui est située sur le côté opposé au côté visible doublé (15),
caractérisée en ce que cette moulure (6, 10, 26, 27) de blocage par serrage est resserrée par écrasement au niveau de son col et présente ainsi un point d'écrasement (14) continu et formé sur toute la longueur de la moulure (6, 10, 26, 27).

2. Procédé pour fabriquer une pièce métallique pourvue d'une doublure, en particulier une pièce intérieure de porte de véhicule automobile qui est garnie d'un revêtement en similicuir et/ou en tissu, selon lequel au moins deux pièces de revêtement (2, 3), par exemple en similicuir et/ou en tissu, sont bloquées mécaniquement, à l'aide de zones de bord (12, 13) reliées en se recouvrant, dans la zone de la rainure située dans la matière, étant précisé que les pièces de revêtement (2, 3) découpées sont collées directement sur la tôle métallique (1) encore non déformée, puis la pièce métallique (1) est déformée par emboutissage avec le revêtement (2, 3) collé, et étant Précisé qu'il est prévu, réalisée dans la tôle métallique (1) à la jonction de deux pièces de revêtement (2, 3), une moulure (6, 10, 26, 27) dans laquelle les zones du bord (12, 13) des pièces de revêtement (2, 3) sont introduites lors de l'emboutissage et immobilisées, et que lesdites zones du bord (12, 13) des pièces de revêtement (2, 3) sont retenues par serrage dans la moulure (6, 10, 26, 27), caractérisé en ce que la moulure (6, 10, 26, 27) est ensuite resserrée par écrasement à l'aide d'un outil au moins dans la zone de transition avec la tôle métallique (1), dans le sens de sa largeur, ce qui forme au moins au niveau du col de la moulure (6, 10, 26, 27) un point d'écrasement continu (14) sur toute la longueur de la moulure (6, 10, 26, 27).
